(19) Europäisches Patentamt
European Patent Office
Office européen des brevets

(11) Veröffentlichungsnummer : **0 149 977**
**B1**

# (12) EUROPÄISCHE PATENTSCHRIFT

(45) Veröffentlichungstag der Patentschrift : **06.07.88**

(51) Int. Cl.[4] : **C 07 F 9/65**, A 01 N 57/32

(21) Anmeldenummer : **84810648.0**

(22) Anmeldetag : **19.12.84**

## (54) Neue N-Phosphoryl- oder N-Thiophosphoryl-N'-s-triazinyl-formamidine.

(30) Priorität : **20.01.84 CH 247/84**
**20.01.84 CH 248/84**
**30.11.84 CH 5712/84**

(43) Veröffentlichungstag der Anmeldung : **31.07.85 Patentblatt 85/31**

(45) Bekanntmachung des Hinweises auf die Patenterteilung : **06.07.88 Patentblatt 88/27**

(84) Benannte Vertragsstaaten : **AT BE CH DE FR IT LI NL SE**

(56) Entgegenhaltungen :
**EP-A- 0 129 511**
**SOVIET INVENTIONS ILLUSTRATED, Section Ch: Chemical, Woche D38, 28. Oktober 1981, Derwent Publications Ltd., Nr. 69182 D/38, London, GB**

(73) Patentinhaber : **CIBA-GEIGY AG**
**Klybeckstrasse 141**
**CH-4002 Basel (CH)**

(72) Erfinder : **Kristiansen, Odd, Dr.**
**Delligrabenstrasse 7**
**CH-4313 Möhlin (CH)**
Erfinder : **Drabek, Jozef, Dr.**
**Benkenstrasse 12**
**CH-4104 Oberwil (CH)**
Erfinder : **Flück, Victor, Dr.**
**Benkenstrasse 99**
**CH-4102 Binningen (CH)**



Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die vorliegende Erfindung betrifft N-Phosphoryl- oder N-Thiophosphoryl-N'-s-triazinyl-formamidine, Verfahren zu ihrer Herstellung und ihre Verwendung in der Schädlingsbekämpfung.

Die N-Phosphoryl- oder N-Thiophosphoryl-N'-s-triazinyl-formamidine haben die Formel

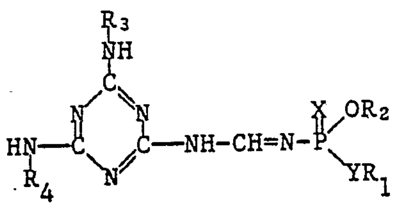

(I)

worin

$R_1$ und $R_2$ unabhängig voneinander $C_1$-$C_{20}$-Alkyl oder gegebenenfalls durch Halogenatome substituiertes Phenyl,

$R_3$ $C_1$-$C_6$-Alkyl oder $C_3$-$C_6$-Cycloalkyl,

$R_4$ Wasserstoff, $C_1$-$C_6$-Alkyl oder $C_3$-$C_6$-Cycloalkyl und

X und Y je Sauerstoff oder Schwefel bedeuten, mit der Massgabe, dass wenn $R_3$ Cyclopropyl ist, $R_4$ nicht für Wasserstoff steht.

Die Verbindungen der Formel I können auch in ihrer tautomeren Form vorliegen.

Unter Halogen ist Fluor, Chlor, Brom oder Jod zu verstehen.

Die Alkylgruppen bei $R_1$, $R_2$, $R_3$ und $R_4$ können geradkettig oder verzweigt sein. Sie haben bei $R_1$ und $R_2$ in der Kette bevorzugt 1 bis 6, insbesondere aber 1 bis 4 Kohlenstoffatome. Beispiele solcher Gruppen sind u. a.: Methyl, Aethyl, Propyl, Isopropyl, n-Butyl, n-Pentyl, n-Hexyl und deren Isomere.

Die bevorzugte Cycloalkylgruppe bei $R_3$ und $R_4$ ist Cyclopropyl.

Bevorzugt sind Verbindungen der Formel I, worin

$R_1$ $C_1$-$C_6$-Alkyl,

$R_2$ $C_1$-$C_6$-Alkyl oder gegebenenfalls durch ein bis drei Halogenatome substituiertes Phenyl,

$R_3$ Cyclopropyl,

$R_4$ Isopropyl oder Cyclopropyl, und

X und Y je Sauerstoff oder Schwefel oder worin

$R_1$ und $R_3$ unabhängig voneinander $C_1$-$C_6$-Alkyl,

$R_2$ $C_1$-$C_6$-Alkyl oder gegebenenfalls durch ein bis drei Halogenatome substituiertes Phenyl,

$R_4$ Wasserstoff und

X und Y je Sauerstoff oder Schwefel bedeuten.

Insbesondere bevorzugt sind Verbindungen der Formel I, worin

$R_1$ und $R_2$ unabhängig voneinander $C_1$-$C_4$-Alkyl,

$R_3$ Cyclopropyl,

$R_4$ Cyclopropyl und

X und Y je Sauerstoff oder Schwefel, oder worin

$R_1$, $R_2$ und $R_3$ unabhängig voneinander $C_1$-$C_4$-Alkyl,

$R_4$ Wasserstoff und

X und Y je Sauerstoff oder Schwefel bedeuten.

Die Verbindungen der Formel I können nach an sich bekannten Methoden z. B. wie folgt hergestellt werden:

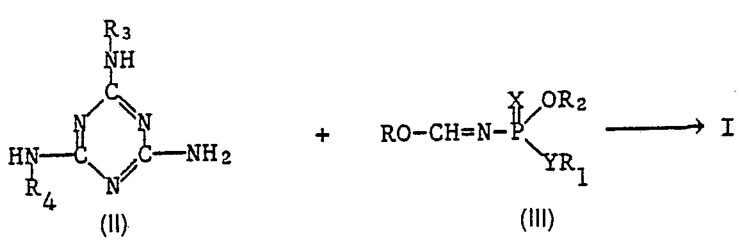

(II) (III)

In den Formeln II und III haben $R_1$, $R_2$, $R_3$, $R_4$, X und Y die für die Formel I angegebene Bedeutung und R steht für $C_1$-$C_6$-Alkyl, insbesondere für Methyl oder Aethyl.

Das Verfahren wird bei einer Reaktionstemperatur zwischen +50 °C und 130 °C, vorzugsweise zwischen +80 °C und 120 °C, bei normalem oder leicht erhöhtem Druck und gegebenenfalls in Gegenwart eines gegenüber den Reaktionsteilnehmern inerten Lösungs- oder Verdünnungsmittels vorgenommen.

Als Lösungs- oder Verdünnungsmittel eignen sich z. B. aliphatische und aromatische Kohlenwasserstoffe, insbesondere Benzol, Toluol, Xylole ; Ketone wie Aceton, Methyläthylketon und Cyclohexanon oder Aether wie Dioxan.

Die Ausgangsstoffe der Formeln II und III sind bekannt bzw. können analog bekannten Methoden hergestellt werden.

Aus der älteren, veröffentlichten europäischen Patentanmeldung 129511 sind insektizid und akarizid wirksame N-Phosphoryl- und N-Thiophosphoryl-N'-s-triazinyl-formamidine bekannt, die in 4-Stellung durch eine Cyclopropylamino- und in 6-Stellung durch eine Aminogruppe substituiert sind.

Die Verbindungen der Formel I eignen sich zur Bekämpfung von Schädlingen an Tieren, Pflanzen und im Boden.

Insbesondere eignen sich die Verbindungen der Formel I zur Bekämpfung von Insekten, z. B. der Ordnung Lepidoptera, Coleoptera, Homoptera, Heteroptera, Diptera, Thysanoptera, Orthoptera, Anoplura, Siphonaptera, Mallophaga, Thysanura, Isoptera, Psocoptera und Hymenoptera und von phytopathogenen Milben und Zecken der Ordnung Acarina.

Vor allem eignen sich Verbindungen der Formel I zur Bekämpfung von pflanzenschädigenden Insekten, insbesondere pflanzenschädigenden Frassinsekten, in Zier- und Nutzpflanzen, insbesondere in Baumwoll- und Reiskulturen (z. B. Spodoptera littoralis, Heliothis virescens und Nilaparvate lugens) und Gemüsekulturen (z. B. Leptinotarsa decemlineata und Myzus persicae) und von Bodeninsekten (z. B. Aulacophora femoralis, Chortophila brassicae, Diabrotica balteata, Pachnoda savignyi und Scotia ypsilon).

In diesem Zusammenhang ist hervorzuheben, dass die genannten Verbindungen auch eine ausgeprägte systemische Wirkung haben.

Wirtstoffe der Formel I zeigen auch eine sehr günstige Wirkung gegen Fliegen, wie z. B. Musca domestica und Mückenlarven. Ferner zeichnen sie sich durch eine breite ovizide und ovolarvizide Wirkung aus und besitzen eine wertvolle Wirkung gegen ektoparasitäre Milben und Zecken z. B. der Familien Ixodidae, Argasidae und Dermanyssidae. Ausserdem besitzen die Verbindungen der Formel I auch gute nematizide Eigenschaften.

Die Verbindungen der Formel I werden in unveränderter Form oder vorzugsweise als Mittel zusammen mit den in der Formulierungstechnik üblichen Hilfsmitteln eingesetzt und werden daher z. B. zu Emulsionskonzentraten, direkt versprühbaren oder verdünnbaren Lösungen, verdünnten Emulsionen, Spritzpulvern, löslichen Pulvern, Stäubemitteln, Granulaten, auch Verkapselungen in z. B. polymeren Stoffen in bekannter Weise verarbeitet. Die Anwendungsverfahren wie Versprühen, Vernebeln, Verstäuben, Verstreuen oder Giessen werden gleich wie die Art der Mittel den angestrebten Zielen und den gegebenen Verhältnissen entsprechend gewählt.

Die Formulierungen, d. h. die den Wirkstoff der Formel I und gegebenenfalls einen festen oder flüssigen Zusatzstoff enthaltenden Mittel, Zubereitungen oder Zusammensetzungen werden in bekannter Weise hergestellt, z. B. durch inniges Vermischen und/oder Vermahlen der Wirkstoffe mit Streckmitteln, wie z. B. mit Lösungsmitteln, festen Trägerstoffen, und gegebenenfalls oberflächenaktiven Verbindungen (Tensiden).

Als Lösungsmittel können in Frage kommen : Aromatische Kohlenwasserstoffe, bevorzugt die Fraktionen $C_8$ bis $C_{12}$, wie z. B. Xylolgemische oder substituierte Naphthaline, Phthalsäureester wie Dibutyl- oder Dioctylphthalat, aliphatische Kohlenwasserstoffe wie Cyclohexan oder Paraffine, Alkohole und Glykole sowie deren Aether und Ester, wie Aethanol, Aethylenglykol, Aethylenglykolmonomethyl- oder -äthyläther, Ketone wie Cyclohexanon, stark polare Lösungsmittel wie N-Methyl-2-pyrrolidon, Dimethylsulfoxid oder Dimethylformamid, sowie gegebenenfalls epoxidierte Pflanzenöle, wie epoxidiertes Kokosnussöl oder Sojaöl ; oder Wasser.

Als feste Trägerstoffe, z. B. für Stäubemittel und dispergierbare Pulver, werden in der Regel natürliche Gesteinsmehle verwendet, wie Calcit, Talkum, Kaolin, Montmorillonit oder Attapulgit. Zur Verbesserung der physikalischen Eigenschaften können auch hochdisperse Kieselsäure oder hochdisperse saugfähige Polymerisate zugesetzt werden. Als gekörnte, adsorptive Granulatträger kommen poröse Typen wie z. B. Bimsstein, Ziegelbruch, Sepiolit oder Bentonit, als nicht sorptive Trägermaterialien z. B. Calcit oder Sand in Frage. Darüberhinaus kann eine Vielzahl von vorgranulierten Materialien anorganischer oder organischer Natur wie insbesondere Dolomit oder zerkleinerte Pflanzenrückstände verwendet werden.

Als oberflächenaktive Verbindungen kommen je nach der Art des zu formulierenden Wirkstoffes der Formel I nichtionogene, kation- und/oder anionaktive Tenside mit guten Emulgier-, Dispergier- und Netzeigenschaften in Betracht. Unter Tensiden sind auch Tensidgemische zu verstehen.

Geeignete anionische Tenside können sowohl sog. wasserlösliche Seifen als auch wasserlösliche synthetische oberflächenaktive Verbindungen sein.

Als Seifen seien die Alkali-, Erdalkali- oder gegebenenfalls substituierten Ammoniumsalze von höheren Fettsäuren ($C_{10}$-$C_{22}$), wie z. B. die Na- oder K-Salze der Oel- oder Stearinsäure, oder von natürlichen Fettsäuregemischen, die z. B. aus Kokosnuss- oder Tallöl gewonnen werden können, genannt. Ferner sind auch die Fettsäuremethyl-taurinsalze zu erwähnen.

Häufiger werden jedoch sogenannte synthetische Tenside verwendet, insbesondere Fettsulfonate, Fettsulfate, sulfonierte Benzimidazolderivate oder Alkylarylsulfonate.

Die Fettsulfonate oder -sulfate liegen in der Regel als Alkali-, Erdalkali- oder gegebenenfalls substituierte Ammoniumsalze vor und weisen einen Alkylrest mit 8 bis 22 C-Atomen auf, wobei Alkyl auch den Alkylteil von Acylresten einschliesst, z. B. das Na- oder Ca-Salz der Ligninsulfonsäure, des Dodecylschwefelsäureesters oder eines aus natürlichen Fettsäuren hergestellten Fettalkoholsulfatgemisches.

Hierher gehören auch die Salze der Schwefelsäureester und Sulfonsäuren von Fettalkohol-Aethylenoxid-Addukten. Die sulfonierten Benzimidazolderivate enthalten vorzugsweise 2 Sulfosäuregruppen und einen Fettsäurerest mit 8 bis 22 C-Atomen. Alkylarylsulfonate sind z. B. die Na-, Ca- oder Triäthanolaminsalze der Dodecylbenzolsulfonsäure, der Dibutylnaphthalinsulfonsäure oder eines Naphthalinsulfonsäure-Formaldehydkondensationsproduktes.

Ferner kommen auch entsprechende Phosphate wie z. B. Salze des Phosphorsäureesters eines p-Nonylphenol-(4-14)-Aethylenoxid-Adduktes oder Phospholipide in Frage.

Als nichtionische Tenside kommen in erster Linie Polyglykolätherderivate von aliphatischen oder cycloaliphatischen Alkoholen, gesättigten oder ungesättigten Fettsäuren und Alkylphenolen in Frage, die 3 bis 10 Glykoläthergruppen und 8 bis 20 Kohlenstoffatome im (aliphatischen) Kohlenwasserstoffrest und 6 bis 18 Kohlenstoffatome im Alkylrest der Alkylphenole enthalten können.

Weitere geeignete nichtionische Tenside sind die wasserlöslichen, 20 bis 250 Aethylenglykoläthergruppen und 10 bis 100 Propylenglykoläthergruppen enthaltenden Polyäthylenoxid-Addukte an Polypropylenglykol, Aethylendiaminopolypropylenglykol und Alkylpolypropylenglykol mit 1 bis 10 Kohlenstoffatomen in der Alkylkette. Die genannten Verbindungen enthalten üblicherweise pro Propylenglykol-Einheit 1 bis 5 Aethylenglykoleinheiten.

Als Beispiele nichtionischer Tenside seien Nonylphenolpolyäthoxyäthanole, Ricinusölpolyglykoläther, Polypropylen-Polyäthylenoxid-Addukte, Tributylphenoxypolyäthoxyäthanol, Polyäthylenglykol und Octylphenoxypolyäthoxyäthanol erwähnt.

Ferner kommen auch Fettsäureester von Polyoxyäthylensorbitan wie das Polyoxyäthylensorbitantrioleat in Betracht.

Bei den kationischen Tensiden handelt es sich vor allem um quaternäre Ammoniumsalze, welche als N-Substituenten mindestens einen Alkylrest mit 8 bis 22 C-Atomen enthalten und als weitere Substituenten niederige, gegebenenfalls halogenierte Alkyl-, Benzyl- oder niedrige Hydroxyalkylreste aufweisen. Die Salze liegen vorzugsweise als Halogenide, Methylsulfate oder Aethylsulfate vor, z. B. das Stearyltrimethylammoniumchlorid oder das Benzyldi(2-chloräthyl)-äthylammoniumbromid.

Die in der Formulierungstechnik gebräuchlichen Tenside sind u. a. in folgenden Publikationen beschrieben : « Mc Cutcheon's Detergents and Emulsifiers Annual » MC Publishing Corp., Ridgewood, New Jersey, 1982 ; Dr. Helmut Stache « Tensid Taschenbuch », Carl Hanser Verlag München/Wien 1981.

Die pestiziden Zubereitungen enthalten in der Regel 0,1 bis 99 %, insbesondere 0,1 bis 95 % Wirkstoff der Formel I, 1 bis 99,9 % eines festen oder flüssigen Zusatzstoffes und 0 bis 25 %, insbesondere 0,1 bis 25 %, eines Tensides.

Während als Handelsware eher konzentrierte Mittel bevorzugt werden, verwendet der Endverbraucher in der Regel verdünnte Mittel.

Die Mittel können auch weitere Zusätze wie Stabilisatoren, Entschäumer, Viskositätsregulatoren, Bindemittel, Haftmittel sowie Dünger oder andere Wirkstoffe zur Erzielung spezieller Effekte enthalten.

Formulierungsbeispiele für flüssige Wirkstoffe der Formel I
(% = Gewichtsprozent)

| Emulsion-Konzentrate | a) | b) | c) |
|---|---|---|---|
| Wirkstoff der Formel I | 25 % | 40 % | 50 % |
| Ca-Dodecylbenzolsulfonat | 5 % | 8 % | 6 % |
| Ricinusöl-polyäthylenglykoläther (36 Mol Aethylenoxid) | 5 % | - | - |
| Tributylphenol-polyäthylenglykoläther (30 Mol Aethylenoxid) | - | 12 % | 4 % |
| Cyclohexanon | - | 15 % | 20 % |
| Xylolgemisch | 65 % | 25 % | 20 % |

Aus solchen Konzentraten können durch Verdünnen mit Wasser Emulsionen jeder gewünschten Konzentration hergestellt werden.

| Lösungen | a) | b) | c) | d) |
|---|---|---|---|---|
| Wirkstoff der Formel I | 80 % | 10 % | 5 % | 95 % |
| Aethylenglykol-monomethyläther | 20 % | - | - | - |
| Polyäthylenglykol (MG 400) | - | 70 % | - | - |
| N-Methyl-2-pyrrolidon | - | 20 % | - | - |
| Epoxidiertes Kokosnussöl | - | - | 1 % | 5 % |
| Benzin (Siedegrenzen 160-190°C) | - | - | 94 % | - |

(MG = Molekulargewicht)

Die Lösungen sind zur Anwendung in Form kleinster Tropfen geeignet.

| Granulate | a) | b) |
|---|---|---|
| Wirkstoff der Formel I | 5 % | 10 % |
| Kaolin | 94 % | - |
| Hochdisperse Kieselsäure | 1 % | - |
| Attapulgit | - | 90 % |

Der Wirkstoff wird in Methylenchlorid gelöst, auf den Träger aufgesprüht und das Lösungsmittel anschliessend im Vakuum abgedampft.

| Stäubemittel | a) | b) |
|---|---|---|
| Wirkstoff der Formel I | 2 % | 5 % |
| Hochdisperse Kieselsäure | 1 % | 5 % |
| Talkum | 97 % | - |
| Kaolin | - | 90 % |

Durch inniges Vermischen der Trägerstoffe mit dem Wirkstoff erhält man gebrauchsfertige Stäubemittel.

Formulierungsbeispiele für feste Wirkstoffe der Formel I
(% = Gewichtsprozent)

| Spritzpulver | a) | b) | c) |
|---|---|---|---|
| Wirkstoff der Formel I | 25 % | 50 % | 75 % |
| Na-Ligninsulfonat | 5 % | 5 % | - |
| Na-Laurylsulfat | 3 % | - | 5 % |
| Na-Diisobutylnaphthalinsulfonat | - | 6 % | 10 % |
| Octylphenolpolyäthylenglykoläther (7-8 Mol Aethylenoxid) | - | 2 % | - |
| Hochdisperse Kieselsäure | 5 % | 10 % | 10 % |
| Kaolin | 62 % | 27 % | - |

Der Wirkstoff wird mit den Zusatzstoffen gut vermischt und in einer geeigneten Mühle vermahlen. Man erhält Spritzpulver, die sich mit Wasser zu Suspensionen jeder gewünschten Konzentration verdünnen lassen.

Emulsions-Konzentrat

| | |
|---|---|
| Wirkstoff der Formel I | 10 % |
| Octylphenolpolyäthylenglykoläther (4-5 Mol Aethylenoxid) | 3 % |
| Ca-Dodecylbenzolsulfonat | 3 % |
| Ricinusölpolyglykoläther (35 Mol Aethylenoxid) | 4 % |
| Cyclohexanon | 30 % |
| Xylolgemisch | 50 % |

Aus diesem Konzentrat können durch Verdünnen mit Wasser Emulsionen jeder gewünschten Konzentration hergestellt werden.

| Stäubemittel | a) | b) |
|---|---|---|
| Wirkstoff der Formel I | 5 % | 8 % |
| Talkum | 95 % | - |
| Kaolin | - | 92 % |

Man erhält anwendungsfertige Stäubemittel, indem der Wirkstoff mit dem Träger vermischt auf einer geeigneten Mühle vermahlen wird.

Extruder Granulat

| | |
|---|---|
| Wirkstoff der Formel I | 10 % |
| Na-Ligninsulfonat | 2 % |
| Carboxymethylcellulose | 1 % |
| Kaolin | 87 % |

Der Wirkstoff wird mit den Zusatzstoffen vermischt, vermahlen und mit Wasser angefeuchtet. Dieses Gemisch wird extrudiert und anschliessend im Luftstrom getrocknet.

Umhüllungs-Granulat

| | |
|---|---|
| Wirkstoff der Formel I | 3 % |
| Polyäthylenglykol (MG 200) | 3 % |
| Kaolin | 94 % |

(MG = Molekulargewicht)

Der fein gemahlene Wirkstoff wird in einem Mischer auf das mit Polyäthylenglykol angefeuchtete Kaolin gleichmässig aufgetragen. Auf diese Weise erhält man staubfreie Umhüllungs-Granulate.

Suspensions-Konzentrat

| | |
|---|---|
| Wirkstoff der Formel I | 40 % |
| Aethylenglykol | 10 % |
| Nonylphenolpolyäthylenglykoläther (15 Mol Aethylenoxid) | 6 % |
| Na-Ligninsulfonat | 10 % |
| Carboxymethylcellulose | 1 % |
| 37 %ige wässrige Formaldehyd-Lösung | 0,2 % |
| Silikonöl in Form einer 75 %igen wässrigen Emulsion | 0,8 % |
| Wasser | 32 % |

Der fein gemahlene Wirkstoff wird mit den Zusatzstoffen innig vermischt. Man erhält so ein Suspensions-Konzentrat, aus welchem durch Verdünnen mit Wasser Suspensionen jeder gewünschten Konzentration hergestellt werden können.

(Siehe Formel Seite 7 f.)

Beispiel 1 : Herstellung der Verbindung der Formel

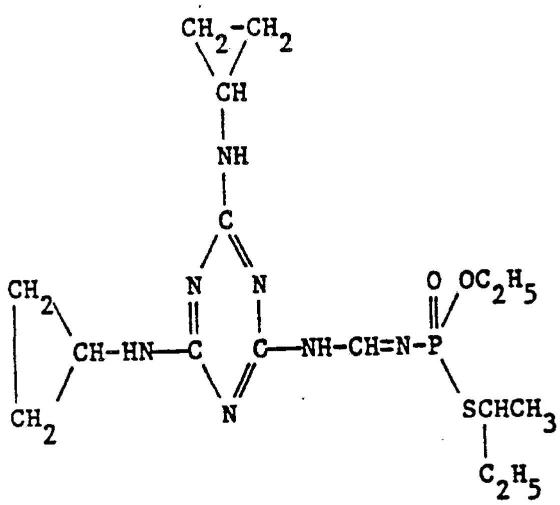

Nr. 1

Eine Lösung von 10,3 g 2-Amino-4,6-bis-cyclopropylamino-1,3,5-triazin und 18,75 g N-(O-Aethyl-S-sek.-butyl-thiolophosphoryl) iminoameisensäureäthylester in 200 ml Dioxan wird 10 Stunden unter Rückfluss gekocht. Nach dem Abdestillieren des Lösungsmittels wird das Rohprodukt in Chloroform aufgenommen und mit Wasser ausgeschüttelt. Nach dem Abdestillieren des Chloroforms und der chromatographischen Reinigung (Kieselgel ; Eluiermitel 90 % Chloroform, 10 % Aethanol) erhält man die Titelverbindung mit einem Schmelzpunkt von 168-169 °C.

Auf analoge Weise werden auch folgende Verbindungen hergestellt :

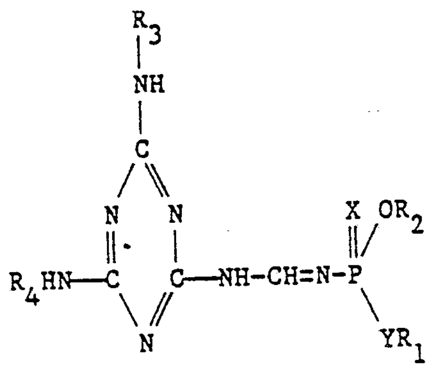

(I)

| Nr. | $R_1$ | $R_2$ | $R_3$ | $R_4$ | X | Y | physikalische Daten |
|---|---|---|---|---|---|---|---|
| 2 | $C_3H_7$(n) | $C_2H_5$ | Cyclo-propyl | $C_3H_7$(i) | O | S | Smp.: 171-173°C |
| 3 | $CH_3$ | $CH_3$ | Cyclo-propyl | $C_3H_7$(i) | O | S | amorph |
| 4 | $C_3H_7$(n) | $C_2H_5$ | Cyclo-propyl | Cyclo-propyl | O | S | Smp.: 133-136°C |
| 5 | $C_2H_5$ | $C_2H_5$ | Cyclo-propyl | Cyclo-propyl | O | S | Smp.: 147-150°C |
| 6 | $C_4H_9$ (sek.) | $C_2H_5$ | Cyclo-propyl | $C_3H_7$(i) | O | S | Smp.: 197-199°C |

Tabelle (Fortsetzung)

| Nr. | $R_1$ | $R_2$ | $R_3$ | $R_4$ | X | Y | physikalische Daten |
|---|---|---|---|---|---|---|---|
| 7 | $CH_3$ | $CH_3$ | $C_3H_7(i)$ | H | O | S | Smp.: 160-162°C |
| 8 | $C_3H_7(n)$ | $C_2H_5$ | $C_3H_7(i)$ | H | O | S | Smp.: 182-184°C |
| 9 | $C_3H_7(n)$ | $C_2H_5$ | $CH_3$ | H | O | S | Smp.: 191-193°C |
| 10 | $C_2H_5$ | $C_2H_5$ | $C_3H_7(i)$ | H | O | S | Smp.: 192-195°C |

Beispiel 2 : Insektizide Frassgift-Wirkung

Baumwollpflanzen werden mit einer Versuchslösung, enthaltend 100 ppm der zu prüfenden Verbindung, besprüht.

Nach dem Antrocknen des Belages werden die Baumwollpflanzen mit Spodoptera littoralis-Larven L-I besetzt. Der Versuch wird bei 24 °C und 60 % relativer Luftfeuchtigkeit durchgeführt.

Verbindungen gemäss Beispiel 1 zeigen im obigen Test 100 %ige Frassgift-Wirkung gegen Spodoptera-Larven.

Beispiel 3 : Wirkung gegen Diabrotica balteata

750 ml Komposterde werden mit 150 ml Testlösung enthaltend 3 ppm Wirkstoff gemischt. Mit der behandelten Erde werden Maiskeimlinge in Plastiktöpfe eingetopft (4 Keimlinge pro Topf mit einem Durchmesser von 10 cm). Die Töpfe werden unmittelbar nachher mit 10 L3-Larven von Diabrotica balteata infestiert. Die Kontrolle wird 10 Tage nach dem Einsetzen der Larven durchgeführt.

Verbindungen gemäss Beispiel 1 zeigen im obigen Test 100 %ige Wirkung gegen L3-Larven von Diabrotica balteata.

**Patentansprüche** (für die Vertragsstaaten : BE, CH, DE, FR, IT, LI, NL, SE)

1. Ein N-Phosphoryl- oder N-Thiophosphoryl-N'-s-triazinyl-formamidin der Formel

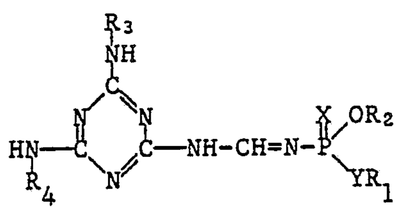

(I)

worin

$R_1$ und $R_2$ unabhängig voneinander $C_1$-$C_{20}$-Alkyl oder gegebenenfalls durch Halogenatome substituiertes Phenyl,

$R_3$ $C_1$-$C_6$-Alkyl oder $C_3$-$C_6$-Cycloalkyl,

$R_4$ Wasserstoff, $C_1$-$C_6$-Alkyl oder $C_3$-$C_6$-Cycloalkyl und

X und Y je Sauerstoff oder Schwefel bedeuten, mit der Massgabe dass wenn $R_3$ Cyclopropyl ist, $R_4$ nicht für Wasserstoff steht.

2. Eine Verbindung gemäss Anspruch 1, worin

$R_1$ $C_1$-$C_6$-Alkyl,

$R_2$ $C_1$-$C_6$-Alkyl oder gegebenenfalls durch ein bis drei Halogenatome substituiertes Phenyl,

$R_3$ Cyclopropyl,

$R_4$ Isopropyl oder Cyclopropyl und

X und Y je Sauerstoff oder Schwefel bedeuten.

3. Eine Verbindung gemäss Anspruch 2, worin

$R_1$ und $R_2$ unabhängig voneinander $C_1$-$C_4$-Alkyl,

$R_3$ Cyclopropyl,
$R_4$ Cyclopropyl und
X und Y je Sauerstoff oder Schwefel bedeuten.

4. Eine Verbindung gemäss Anspruch 1, worin
$R_1$ und $R_3$ unabhängig voneinander $C_1$-$C_6$-Alkyl,
$R_2$ $C_1$-$C_6$-Alkyl oder gegebenenfalls durch ein bis drei Halogenatome substituiertes Phenyl,
$R_4$ Wasserstoff und
X und Y je Sauerstoff oder Schwefel bedeuten.

5. Eine Verbindung gemäss Anspruch 4, worin
$R_1$, $R_2$ und $R_3$ unabhängig voneinander $C_1$-$C_4$-Alkyl,
$R_4$ Wasserstoff und
X und Y je Sauerstoff oder Schwefel bedeuten.

6. Die Verbindung gemäss Anspruch 3 der Formel

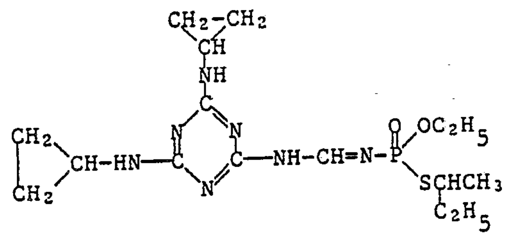

7. Die Verbindung gemäss Anspruch 2 der Formel

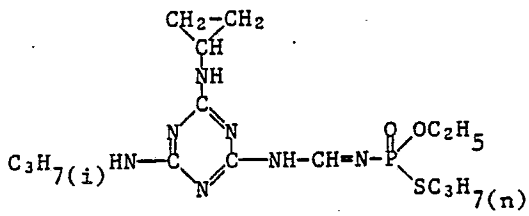

8. Die Verbindung gemäss Anspruch 2 der Formel

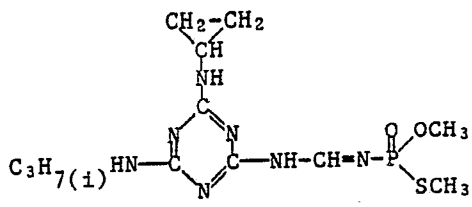

9. Die Verbindung gemäss Anspruch 3 der Formel

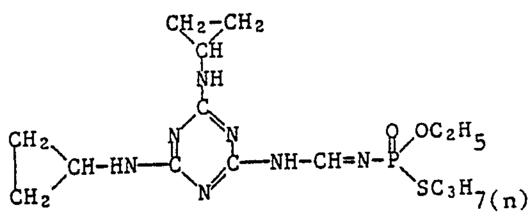

10. Die Verbindung gemäss Anspruch 3 der Formel

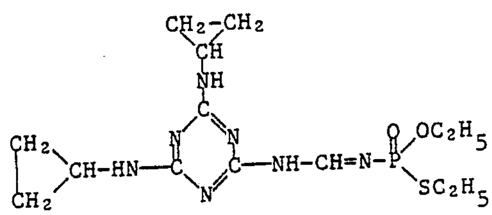

11. Die Verbindung gemäss Anspruch 2 der Formel

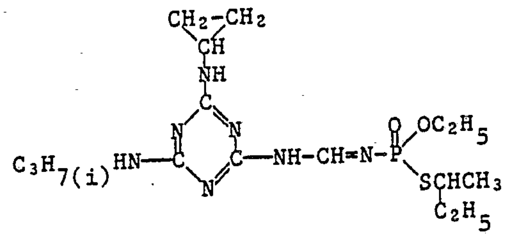

12. Die Verbindung gemäss Anspruch 5 der Formel

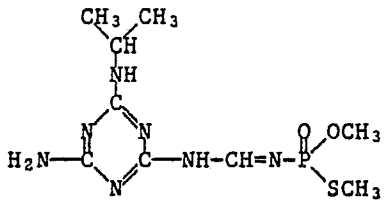

13. Die Verbindung gemäss Anspruch 5 der Formel

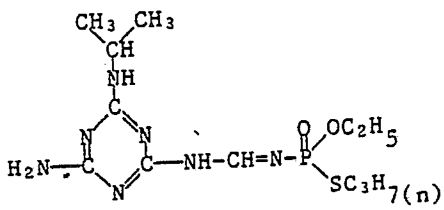

14. Die Verbindung gemäss Anspruch 5 der Formel

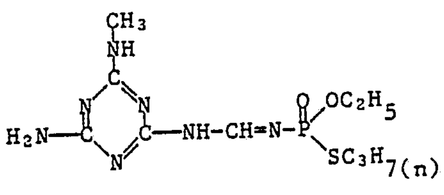

15. Die Verbindung gemäss Anspruch 5 der Formel

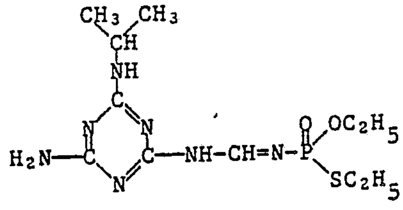

16. Verfahren zur Herstellung von Verbindung gemäss Anspruch 1, dadurch gekennzeichnet, dass man eine Verbindung der Formel

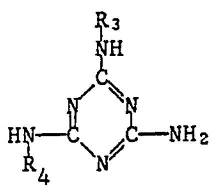

mit einer Verbindung der Formel

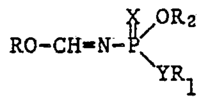

umsetzt, worin $R_1$, $R_2$, $R_3$, $R_4$, X und Y die im Anspruch 1 angegebene Bedeutung haben und R für ein $C_1$-$C_6$-Alkyl steht.

17. Ein Schädlingsbekämpfungsmittel, welches als aktive Komponente eine Verbindung gemäss Anspruch 1 enthält.

18. Die Verwendung einer Verbindung gemäss Anspruch 1 zur Bekämpfung von Schädlingen an Tieren, Pflanzen und im Boden.

19. Die Verwendung gemäss Anspruch 18 zur Bekämpfung von Insekten, Vertretern der Ordnung Akarina und phytopathogenen Nematoden.

**Patentansprüche** (für den Vertragsstaat AT)

1. Ein Schädlingsbekämpfungsmittel, welches neben flüssigen und festen Zusatzstoffen als aktive Komponente ein N-Phosphoryl- oder N-Thiophosphoryl-N'-s-triazinyl-formamidin der Formel

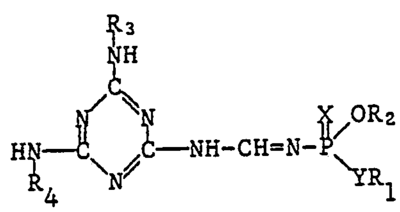
(I)

enthält, worin
$R_1$ und $R_2$ unabhängig voneinander $C_1$-$C_{20}$-Alkyl oder gegebenenfalls durch Halogenatome substituiertes Phenyl,
$R_3$ $C_1$-$C_6$-Alkyl oder $C_3$-$C_6$-Cycloalkyl,
$R_4$ Wasserstoff, $C_1$-$C_6$-Alkyl oder $C_3$-$C_6$-Cycloalkyl und
X und Y je Sauerstoff oder Schwefel bedeuten, mit der Massgabe dass wenn $R_3$ Cyclopropyl ist, $R_4$ nicht für Wasserstoff steht.

2. Ein Schädlingsbekämpfungsmittel gemäss Anspruch 1, welches als aktive Komponente eine Verbindung der Formel I enthält, worin
$R_1$ $C_1$-$C_6$-Alkyl,
$R_2$ $C_1$-$C_6$-Alkyl oder gegebenenfalls durch ein bis drei Halogenatome substituiertes Phenyl,
$R_3$ Cyclopropyl,
$R_4$ Isopropyl oder Cyclopropyl und
X und Y je Sauerstoff oder Schwefel bedeuten.

3. Ein Schädlingsbekämpfungsmittel gemäss Anspruch 2, welches als aktive Komponente eine Verbindung der Formel I enthält, worin $R_1$ und $R_2$ unabhängig voneinander $C_1$-$C_4$-Alkyl,
$R_3$ Cyclopropyl,
$R_4$ Cyclopropyl und
X und Y je Sauerstoff oder Schwefel bedeuten.

4. Ein Schädlingsbekämpfungsmittel gemäss Anspruch 1, welches als aktive Komponente eine Verbindung der Formel I enthält, worin
$R_1$ und $R_3$ unabhängig voneinander $C_1$-$C_6$-Alkyl,
$R_2$ $C_1$-$C_6$-Alkyl oder gegebenenfalls durch ein bis drei Halogenatome substituiertes Phenyl,
$R_4$ Wasserstoff und
X und Y je Sauerstoff oder Schwefel bedeuten.

5. Ein Schädlingsbekämpfungsmittel gemäss Anspruch 4, welches als aktive Komponente eine Verbindung der Formel I enthält, worin
$R_1$, $R_2$ und $R_3$ unabhängig voneinander $C_1$-$C_4$-Alkyl,
$R_4$ Wasserstoff und
X und Y je Sauerstoff oder Schwefel bedeuten.

6. Ein Schädlingsbekämpfungsmittel gemäss Anspruch 3, welches als aktive Komponente die Verbindung der Formel

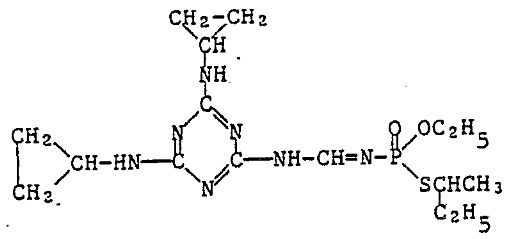

enthält.

7. Ein Schädlingsbekämpfungsmittel gemäss Anspruch 2, welches als aktive Komponente die Verbindung der Formel

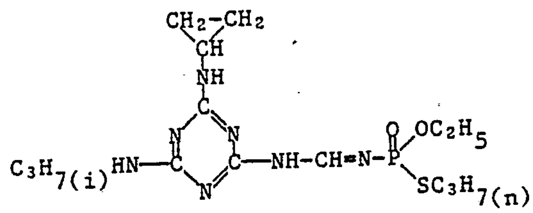

enthält.

8. Ein Schädlingsbekämpfungsmittel gemäss Anspruch 2, welches als aktive Komponente die Verbindung der Formel

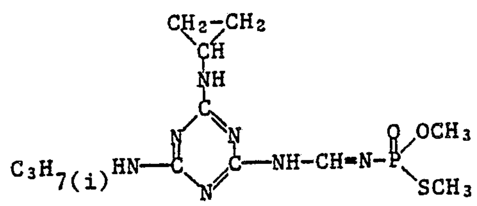

enthält.

9. Ein Schädlingsbekämpfungsmittel gemäss Anspruch 3, welches als aktive Komponente die Verbindung der Formel

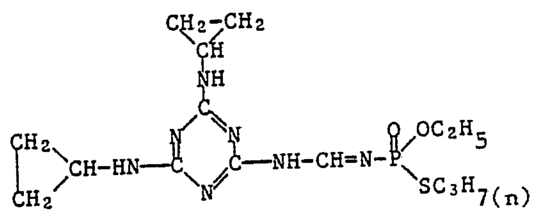

enthält.

10. Ein Schädlingsbekämpfungsmittel gemäss Anspruch 3, welches als aktive Komponente die Verbindung der Formel

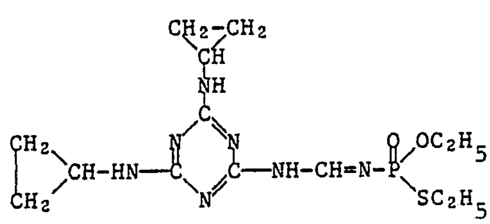

enthält.

11. Ein Schädlingsbekämpfungsmittel gemäss Anspruch 2, welches als aktive Komponente die Verbindung der Formel

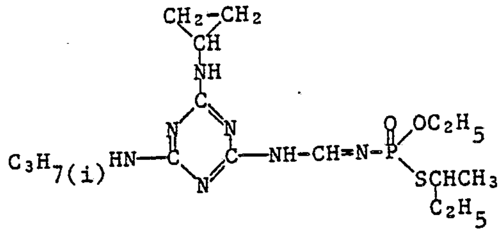

enthält.

12. Ein Schädlingsbekämpfungsmittel gemäss Anspruch 5, welches als aktive Komponente die Verbindung der Formel

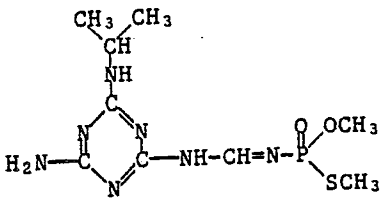

enthält.

13. Ein Schädlingsbekämpfungsmittel gemäss Anspruch 5, welches als aktive Komponente die Verbindung der Formel

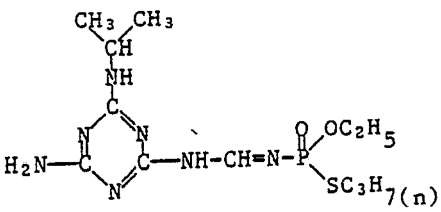

enthält.

14. Ein Schädlingsbekämpfungsmittel gemäss Anspruch 5, welches als aktive Komponente die Verbindung der Formel

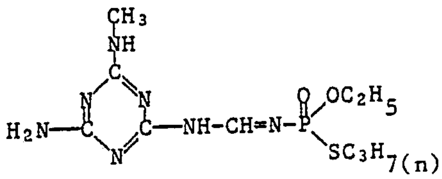

enthält.

15. Ein Schädlingsbekämpfungsmittel gemäss Anspruch 5, welches als aktive Komponente die Verbindung der Formel

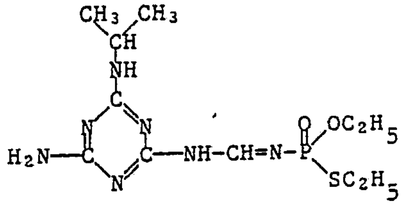

enthält.

16. Verfahren zur Herstellung von N-Phosphoryl- oder N-Thiophosphoryl-formamidinen der Formel I

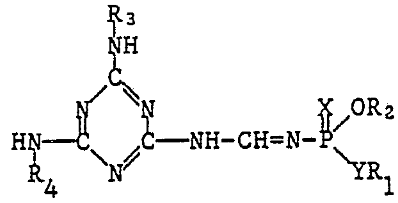 (I)

worin

$R_1$ und $R_2$ unabhängig voneinander $C_1$-$C_{20}$-Alkyl oder gegebenenfalls durch Halogenatome substituiertes Phenyl,

$R_3$ $C_1$-$C_6$-Alkyl oder $C_3$-$C_6$-Cycloalkyl,

$R_4$ Wasserstoff, $C_1$-$C_6$-Alkyl oder $C_3$-$C_6$-Cycloalkyl und

X und Y je Sauerstoff oder Schwefel bedeuten, mit der Massgabe dass wenn $R_3$ Cyclopropyl ist, $R_4$ nicht für Wasserstoff steht, dadurch gekennzeichnet, dass man eine Verbindung der Formel

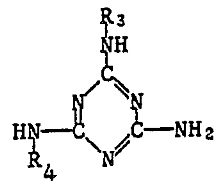

mit einer Verbindung der Formel

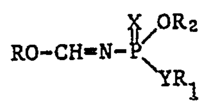

umsetzt, worin $R_1$, $R_2$, $R_3$, $R_4$, X und Y die oben angegebene Bedeutung haben und R für ein $C_1$-$C_6$-Alkyl steht.

17. Die Verwendung eines Mittels gemäss Anspruch 1 zur Bekämpfung von Schädlingen an Tieren, Pflanzen und im Boden.

18. Die Verwendung gemäss Anspruch 17 zur Bekämpfung von Insekten, Vertretern der Ordnung Akarina und phytopathogenen Nematoden.

**Claims** (for the Contracting States : BE, CH, DE, FR, IT, LI, NL, SE)

1. An N-phosphoryl- or N-thiophosphoryl-N′-s-triazinylformamidine of the formula

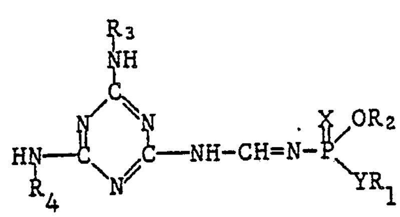 (I)

wherein

$R_1$ and $R_2$ independently of one another are each $C_1$-$C_{20}$-alkyl, or phenyl unsubstituted or substituted by halogen atoms,

$R_3$ is $C_1$-$C_6$-alkyl or $C_3$-$C_6$-cycloalkyl,

$R_4$ is hydrogen, $C_1$-$C_6$-alkyl or $C_3$-$C_6$-cycloalkyl, and

X and Y are each oxygen or sulfur, with the proviso that, when $R_3$ is cyclopropyl, $R_4$ is not hydrogen.

2. A compound according to claim 1, wherein

$R_1$ is $C_1$-$C_6$-alkyl,

$R_2$ is $C_1$-$C_6$-alkyl, or phenyl unsubstituted or substituted by one to three halogen atoms,

$R_3$ is cyclopropyl,

$R_4$ is isopropyl or cyclopropyl, and
X and Y are each oxygen or sulfur.

3. A compound according to claim 2, wherein
$R_1$ and $R_2$ independently of one another are each $C_1$-$C_4$-alkyl,
$R_3$ is cyclopropyl,
$R_4$ is cyclopropyl, and
X and Y are each oxygen or sulfur.

4. A compound according to claim 1, wherein
$R_1$ and $R_3$ independently of one another are each $C_1$-$C_6$-alkyl,
$R_2$ is $C_1$-$C_6$-alkyl, or phenyl unsubstituted or substituted by one to three halogen atoms,
$R_4$ is hydrogen, and
X and Y are each oxygen or sulfur.

5. A compound according to claim 4, wherein
$R_1$, $R_2$ and $R_3$ independently of one another are each $C_1$-$C_4$-alkyl,
$R_4$ is hydrogen, and
X and Y are each oxygen or sulfur.

6. The compound according to claim 3 of the formula

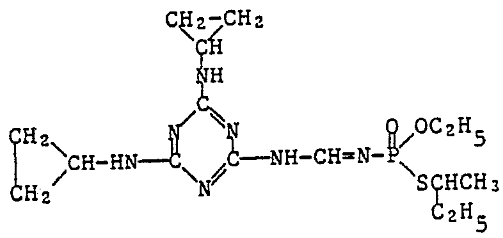

7. The compound according to claim 2 of the formula

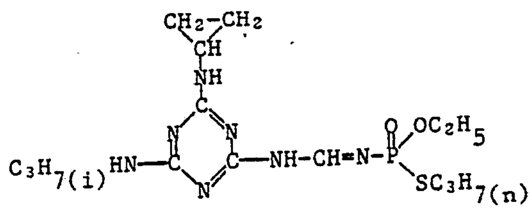

8. The compound according to claim 2 of the formula

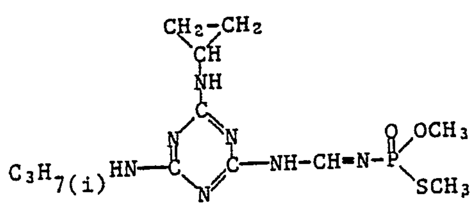

9. The compound according to claim 3 of the formula

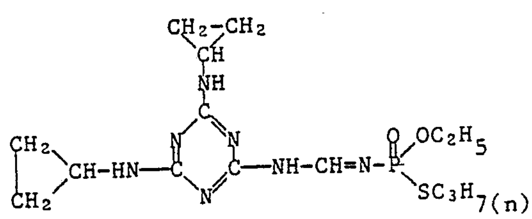

10. The compound according to claim 3 of the formula

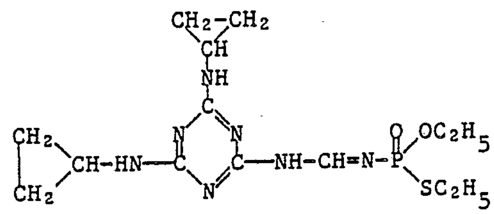

11. The compound according to claim 2 of the formula

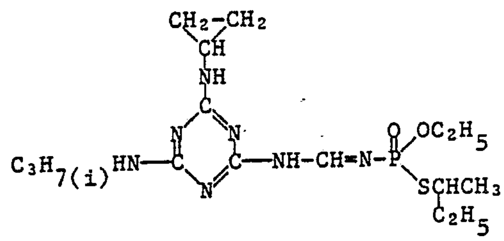

12. The compound according to claim 5 of the formula

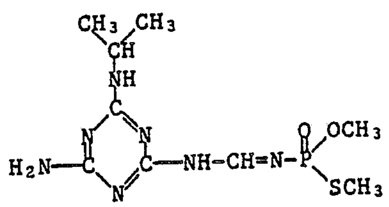

13. The compound according to claim 5 of the formula

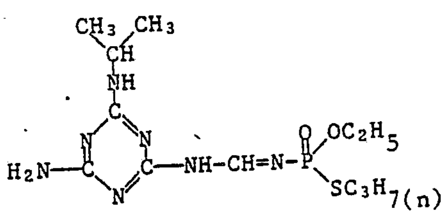

14. The compound according to claim 5 of the formula

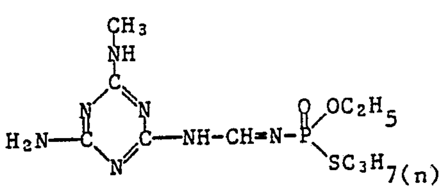

15. The compound according to claim 5 of the formula

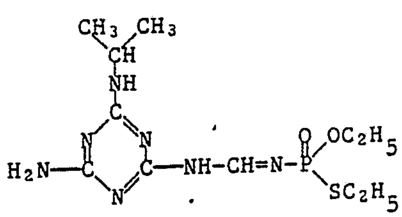

16. A process for producing compounds according to claim 1, characterised in that a compound of the formula

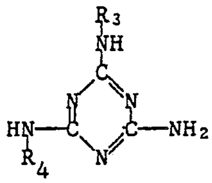

is reacted with a compound of the formula

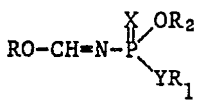

wherein $R_1$, $R_2$, $R_3$, $R_4$, X and Y have the meanings defined in claim 1, and R is $C_1$-$C_6$-alkyl.

17. A pesticidal composition which contains as active ingredient a compound according to claim 1.

18. The use of a compound according to claim 1 for controlling pests on animals and plants and in the soil.

19. The use according to claim 18 for controlling insects, members of the order Acarina, and phytopathogenic nematodes.

**Claims** (for the Contracting State AT)

1. A pesticidal composition which contains as active ingredient an N-phosphoryl- or N-thiophosphoryl-N'-s-triazinyl-formamidine of the formula.

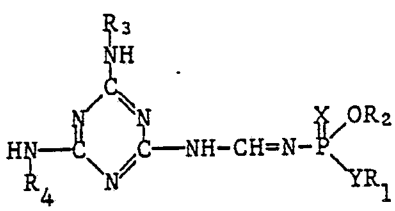

(I)

wherein

$R_1$ and $R_2$ independently of one another are each $C_1$-$C_{20}$-alkyl, or phenyl unsubstituted or substituted by halogen atoms,

$R_3$ is $C_1$-$C_6$-alkyl or $C_3$-$C_6$-cycloalkyl,

$R_4$ is hydrogen, $C_1$-$C_6$-alkyl or $C_3$-$C_6$-cycloalkyl, and

X and Y are each oxygen or sulfur, with the proviso that, when $R_3$ is cyclopropyl, $R_4$ is not hydrogen, together with liquid and solid adjuvants.

2. A pesticidal composition according to claim 1 which contains as active ingredient a compound of the formula I

wherein

$R_1$ is $C_1$-$C_6$-alkyl,

$R_2$ is $C_1$-$C_6$-alkyl or phenyl unsubstituted or substituted by one to three halogen atoms,

$R_3$ is cyclopropyl,

$R_4$ is isopropyl or cyclopropyl, and

X and Y are each oxygen or sulfur.

3. A pesticidal composition according to claim 2 which contains as active ingredient a compound of the formula I

wherein

$R_1$ and $R_2$, independently of one another are each $C_1$-$C_4$-alkyl,

$R_3$ is cyclopropyl,

$R_4$ is cyclopropyl, and

X and Y are each oxygen or sulfur.

4. A pesticidal composition according to claim 1 which contains as active ingredient a compound of the formula I

wherein

$R_1$ and $R_3$ independently of one another are each $C_1$-$C_6$-alkyl,

$R_2$ is $C_1$-$C_6$-alkyl, or phenyl unsubstituted or substituted by one to three halogen atoms,
$R_4$ is hydrogen, and
X and Y are each oxygen or sulfur.

5. A pesticidal composition according to claim 4 which contains as active ingredient a compound of the formula I
wherein
$R_1$, $R_2$ and $R_3$ independently of one another are each $C_1$-$C_4$-alkyl,
$R_4$ is hydrogen, and
X and Y are each oxygen or sulfur.

6. A pesticidal composition according to claim 3 which contains as active ingredient the compound of the formula

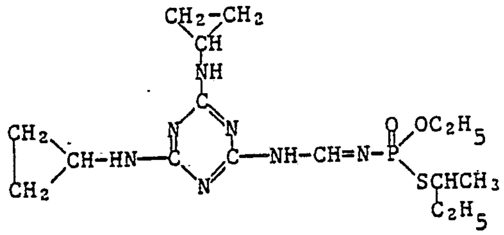

7. A pesticidal composition according to claim 2 which contains as active ingredient the compound of the formula

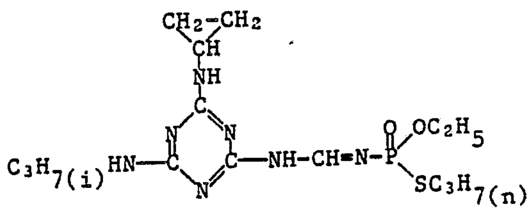

8. A pesticidal composition according to claim 2 which contains as active ingredient the compound of the formula

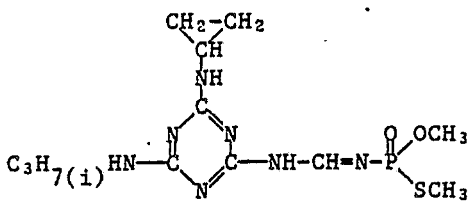

9. A pesticidal composition according to claim 3 which contains as active ingredient the compound of the formula

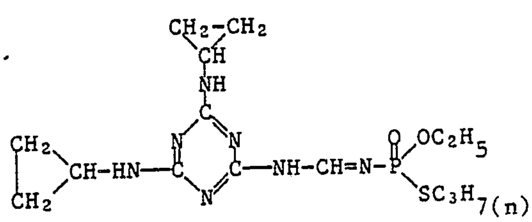

10. A pesticidal composition according to claim 3 which contains as active ingredient the compound of the formula

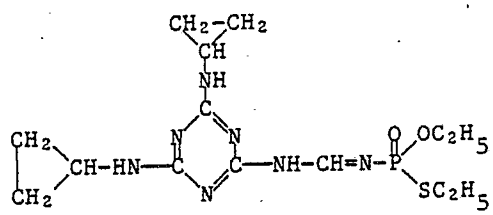

11. A pesticidal composition according to claim 2 which contains as active ingredient the compound of the formula

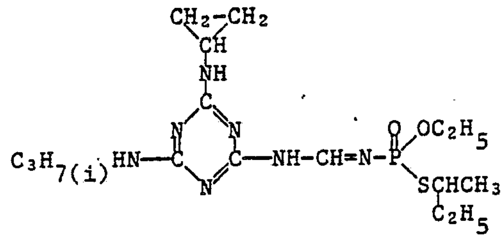

12. A pesticidal composition according to claim 5 which contains as active ingredient the compound of the formula

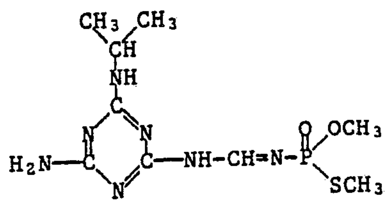

13. A pesticidal composition according to claim 5 which contains as active ingredient the compound of the formula

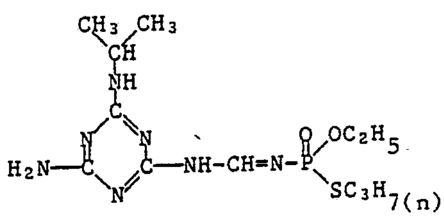

14. A pesticidal composition according to claim 5 which contains as active ingredient the compound of the formula

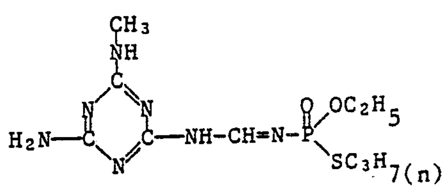

15. A pesticidal composition according to claim 5 which contains as active ingredient the compound of the formula

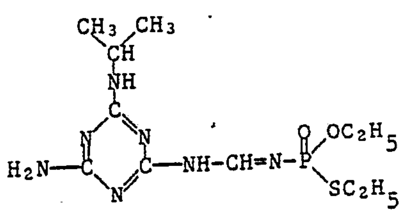

16. A process for producing N-phosphoryl- or N-thiophosphoryl-formamidines of the formula I

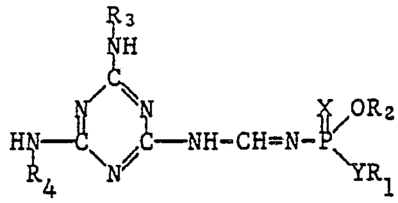

(I)

wherein

$R_1$ and $R_2$ independently of one another are each $C_1$-$C_{20}$-alkyl, or phenyl unsubstituted or substituted by halogen atoms,

$R_3$ is $C_1$-$C_6$-alkyl or $C_3$-$C_6$-cycloalkyl,

$R_4$ is hydrogen, $C_1$-$C_6$-alkyl or $C_3$-$C_6$-cycloalkyl, and

X and Y are each oxygen or sulfur, with the proviso that, when $R_3$ is cyclopropyl, $R_4$ is not hydrogen, characterised in that a compound of the formula

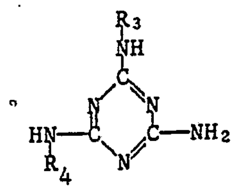

is reacted with a compound of the formula

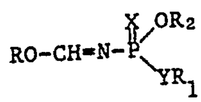

wherein $R_1$, $R_2$, $R_3$, $R_4$, X and Y have the meanings defined above, and R is $C_1$-$C_6$-alkyl.

17. The use of a composition according to claim 1 for controlling pests on animals and plants and in the soil.

18. The use according to claim 17 for controlling insects, members of the order Acarina, and phytopathogenic nematodes.

**Revendications** (pour les Etats contractants : BE, CH, DE, FR, IT, LI, NL, SE)

1. N-phosphoryl- ou N-thiophosphoryl-N'-trizinyl-formamidine de formule

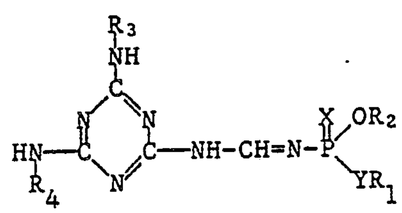

(I)

où

$R_1$ et $R_2$ représentent indépendamment l'un de l'autre un alcoyle en $C_1$-$C_{20}$ ou un phényle éventuellement substitué par des atomes d'halogène,

$R_3$ représente un alcoyle en $C_1$-$C_6$ ou un cycloalcoyle en $C_3$-$C_6$,

$R_4$ représente un hydrogène, alcoyle en $C_1$-$C_6$ ou cycloalcoyle en $C_3$-$C_6$ et

X et Y représentent chacun un oxygène ou un soufre, avec cette précision que lorsque $R_3$ est un cyclopropyle, $R_4$ ne représente pas un hydrogène.

2. Composé selon la revendication 1, où

$R_1$ représente un alcoyle en $C_1$-$C_6$,

$R_2$ représente un alcoyle en $C_1$-$C_6$ ou un phényle éventuellement substitué par de 1 à 3 atomes d'halogène,

$R_3$ représente un cyclopropyle,

$R_4$ un isopropyle ou un cyclopropyle et

X et Y représentent chacun un oxygène ou un soufre.

3. Composé selon la revendication 2, où $R_1$ et $R_2$ représentent indépendamment l'un de l'autre un alcoyle en $C_1$-$C_4$,

$R_3$ représente un cyclopropyle,

$R_4$ un cyclopropyle et

X et Y représentent chacun un oxygène ou un soufre.

4. Composé selon la revendication 1, où $R_1$ et $R_3$ représentent indépendamment l'un de l'autre un alcoyle en $C_1$-$C_6$,

$R_2$ représente un alcoyle en $C_1$-$C_6$ ou un phényle éventuellement substitué par de 1 à 3 atomes d'halogène,

$R_4$ représente un hydrogène et

X et Y représentent chacun un oxygène ou un soufre.

5. Composé selon la revendication 4, où $R_1$, $R_2$ et $R_3$ représentent indépendamment l'un de l'autre un alcoyle en $C_1$-$C_4$,

$R_4$ représente un hydrogène et

X et Y représentent chacun un oxygène ou un soufre.

6. Composé selon la revendication 3 de formule

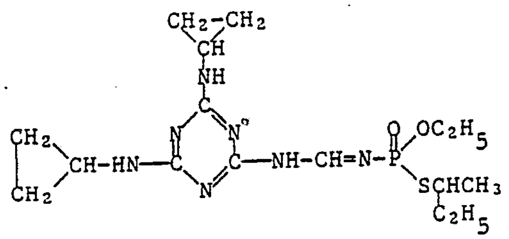

7. Composé selon la revendication 2 de formule

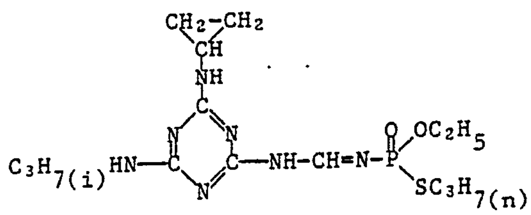

8. Composé selon la revendication 2 de formule

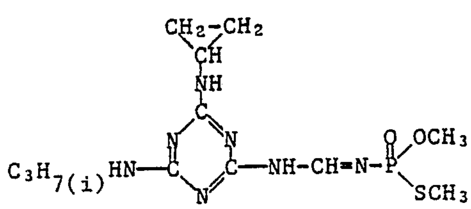

9. Composé selon la revendication 3 de formule

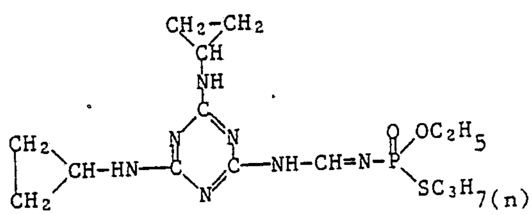

10. Composé selon la revendication 3 de formule

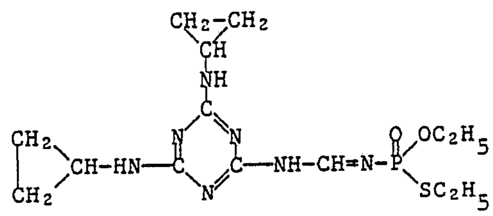

11. Composé selon la revendication 2 de formule

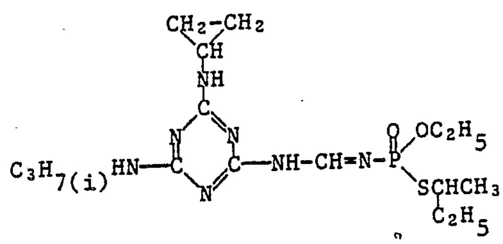

12. Composé selon la revendication 5 de formule

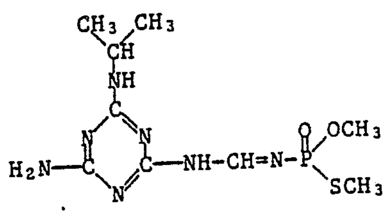

13. Composé selon la revendication 5 de formule

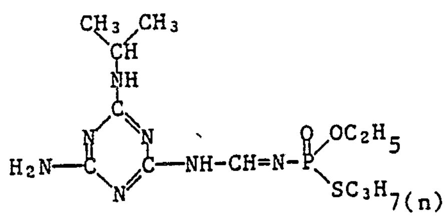

14. Composé selon la revendication 5 de formule

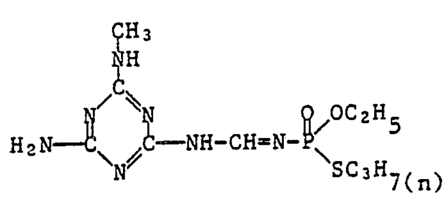

15. Composé selon la revendication 5 de formule

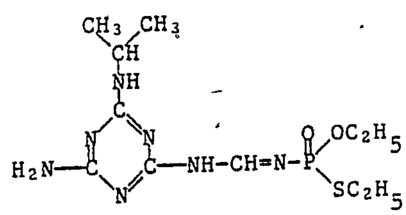

16. Procédé de préparation de composés selon la revendication 1, caractérisé en ce qu'on fait réagir un composé de formule

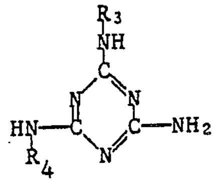

avec un composé de formule

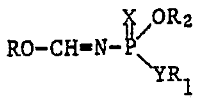

où $R_1$, $R_2$, $R_3$, $R_4$, X et Y ont la signification indiquée dans la revendication 1, et R représente un alcoyle en $C_1$-$C_6$.

17. Agent de lutte anti-parasitaire qui contient comme composant actif un composé selon la revendication 1.

18. Application d'un composé selon la revendication 1 à la lutte contre les parasites chez les animaux, les plantes et dans le sol.

19. Application selon la revendication 18 à la lutte contre les insectes, les représentants de l'ordre des acariens et les nématodes phytopathogènes.

**Revendications** (pour l'Etat contractant AT)

1. Agent de lutte anti-parasitaire qui contient outre des additifs liquides et solides, comme composant actif une N-phosphoryl- ou N-thiophosphory-N'-s-triazinyl-formamidine de formule

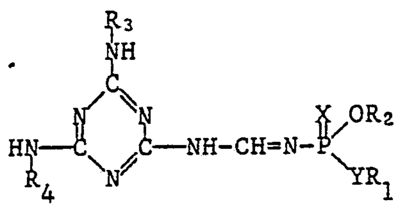

(I)

où

$R_1$ et $R_2$ représentent indépendamment l'un de l'autre un alcoyle en $C_1$-$C_{20}$ ou un phényle éventuellement substitué par des atomes d'halogène,

$R_3$ représente un alcoyle en $C_1$-$C_6$ ou un cycloalcoyle en $C_3$-$C_6$,

$R_4$ représente un hydrogène, un alcoyle en $C_1$-$C_6$ ou un cycloalcoyle en $C_3$-$C_6$ et

X et Y représentent chacun un oxygène ou un soufre, avec cette précision que lorsque $R_3$ est un cyclopropyle, $R_4$ ne représente pas un hydrogène.

2. Agent de lutte anti-parasitaire selon la revendication 1, qui contient comme composant actif un composé de formule I où

$R_1$ représente un alcoyle en $C_1$-$C_6$,

$R_2$ représente un alcoyle en $C_1$-$C_6$ ou un phényle éventuellement substitué par de 1 à 3 atomes d'halogène,

$R_3$ représente un cyclopropyle,

$R_4$ représente un isopropyle ou un cyclopropyle et

X et Y représentent chacun un oxygène ou un soufre.

3. Agent de lutte anti-parasitaire selon la revendication 2, qui contient comme composant actif un composé de formule I, où

$R_1$ et $R_2$ représentent indépendamment l'un de l'autre un alcoyle en $C_1$-$C_4$,

$R_3$ représente un cyclopropyle,

$R_4$ représente un cyclopropyle et

X et Y représentent chacun un oxygène ou un soufre.

4. Agent de lutte anti-parasitaire selon la revendication 1, qui contient comme composant actif un composé de formule I, où

$R_1$ et $R_3$ représentent indépendamment l'un de l'autre un alcoyle en $C_1$-$C_6$,

$R_2$ représente un alcoyle en $C_1$-$C_6$ ou un phényle éventuellement substitué par de 1 à 3 atomes d'halogène,

$R_4$ représente un hydrogène et

X et Y représentent chacun un oxygène ou un soufre.

5. Agent de lutte anti-parasitaire selon la revendication 4, qui contient comme composant actif un composé de formule I où $R_1$, $R_2$, et $R_3$ représentent indépendamment l'un de l'autre un alcoyle en $C_1$-$C_4$,

$R_4$ représente un hydrogène et

X et Y représentent chacun un oxygène ou un soufre.

6. Agent de lutte anti-parasitaire selon la revendication 3, qui contient comme composant actif le composé de formule

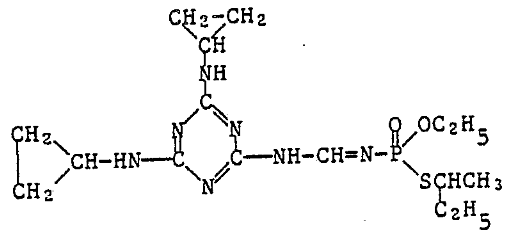

7. Agent de lutte anti-parasitaire selon la revendication 2, qui contient comme composant actif le composé de formule

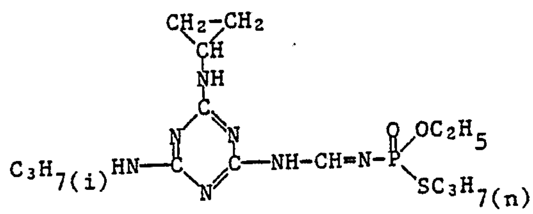

8. Agent de lutte antiparasitaire selon la revendication 2, qui contient comme composant actif le composé de formule

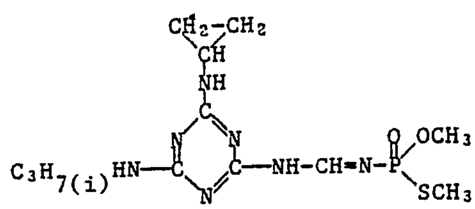

9. Agent de lutte anti-parasitaire selon la revendication 3, qui contient comme composant actif le composé de formule

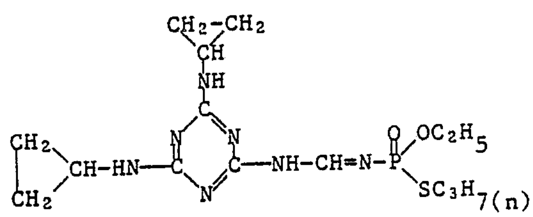

10. Agent de lutte anti-parasitaire selon la revendication 3, qui contient comme composant actif le composé de formule

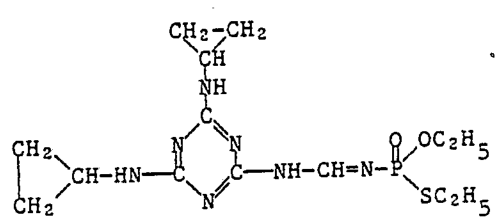

11. Agent de lutte anti-parasitaire selon la revendication 2, qui contient comme composant actif le composé de formule

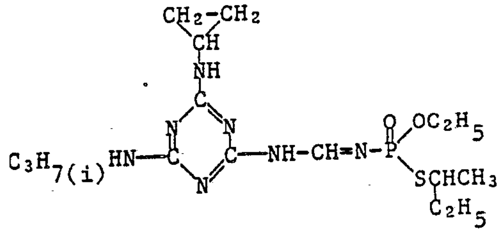

12. Agent de lutte anti-parasitaire selon la revendication 5, qui contient comme composant actif le composé de formule

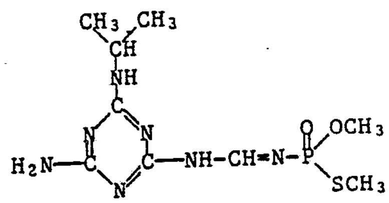

13. Agent de lutte anti-parasitaire selon la revendication 5, qui contient comme composant actif le composé de formule

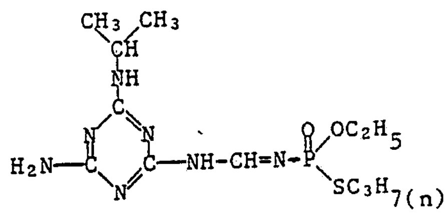

14. Agent de lutte anti-parasitaire selon la revendication 5, qui contient comme composant actif le composé de formule

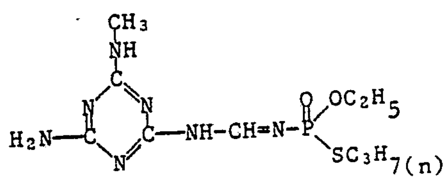

15. Agent de lutte anti-parasitaire selon la revendication 5, qui contient comme composant actif le composé de formule

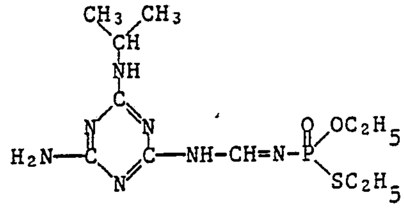

16. Procédé de préparation de N-phosphoryl- ou N-thiophosphoryl-formamidinines de formule I

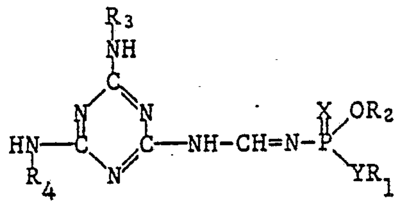

(I)

où

$R_1$ et $R_2$ représentent indépendamment l'un de l'autre un alcoyle en $C_1$-$C_{20}$ ou un phényle éventuellement substitué par des atomes d'halogène,

$R_3$ représente un alcoyle en $C_1$-$C_6$ ou un cycloalcoyle en $C_3$-$C_6$,

$R_4$ représente un hydrogène, un alcoyle en $C_1$-$C_6$ ou un cycloalcoyle en $C_3$-$C_6$ et

X et Y représentent chacun un oxygène ou un soufre, avec cette précision que lorsque $R_3$ est un cyclopropyle, $R_4$ ne représente pas un hydrogène, caractérisé en ce qu'on fait réagir un composé de formule

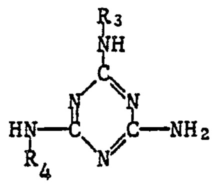

avec un composé de formule

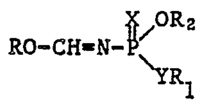

où $R_1$, $R_2$, $R_3$, $R_4$, X et Y ont la signification indiquée ci-dessus, et R représente un alcoyle en $C_1$-$C_6$.

17. Application d'un agent selon la revendication 1 à la lutte contre les parasites chez les animaux, les plantes et dans le sol.

18. Application selon la revendication 17 à la lutte contre les insectes, les représentants de l'ordre des acariens et les nématodes phytopathogènes.